# EUROPÄISCHE PATENTSCHRIFT

(11) **EP 4 490 468 B1**
(45) Veröffentlichungstag und Bekanntmachung des Hinweises auf die Patenterteilung: **06.05.2026**
(21) Anmeldenummer: 23717098.0
(22) Anmeldetag: 31.03.2023
(51) Int. Cl.: G01B 11/25

(54) **MESSEINHEIT UND VERFAHREN ZUR OPTISCHEN VERMESSUNG VON OBJEKTEN**
MEASURING UNIT AND METHOD FOR OPTICALLY MEASURING OBJECTS
UNITÉ DE MESURE ET PROCÉDÉ DE MESURE OPTIQUE D'OBJETS

(30) Priorität: 11.04.2022 DE 102022108738
(43) Veröffentlichungstag der Anmeldung: 15.01.2025
(73) Patentinhaber: Carl Zeiss GOM Metrology GmbH, 38122 Braunschweig (DE); Carl Zeiss Industrielle Messtechnik GmbH, 73447 Oberkochen (DE)
(72) Erfinder: JÖRCK, Michael, 38114 Braunschweig (DE); SEMSCH, Torsten, 83122 Samerberg (DE); BOTHE, Thorsten, 38124 Braunschweig (DE); WINTER, Tim, 38118 Braunschweig (DE)
(74) Vertreter: Gerstein, Hans Joachim
(86) Internationale Anmeldenummer: PCT/EP2023/058534
(87) Internationale Veröffentlichungsnummer: WO 2023/198480

(56) Entgegenhaltungen:
- DE-A1- 102012 113 021
- US-A1- 2011 292 406
- US-A1- 2019 049 237

## Beschreibung

Die Erfindung betrifft eine Messeinrichtung zur optischen Vermessung von Objekten mit einer Bildaufnahmeeinheit und einer Laserprojektionseinheit, die eine Laserlichtquelle hat, wobei die Laserprojektionseinheit zum Aufprojizieren von Laserlicht auf ein zu vermessendes Objekt und die Bildaufnahmeeinheit zur Bildaufnahme des Objektes mit dem aufprojizierten Laserlicht ausgebildet sind.

Die Erfindung betrifft weiterhin ein Verfahren zur optischen Vermessung von Objekten mittels Projektion von Laserlicht mit einer Laserprojektionseinheit, die eine Laserlichtquelle hat, auf das zu vermessende Objekt und mittels Bildaufnahme des Objektes mit dem aufprojizierten Laserlicht mit einer Bildaufnahmeeinheit. Insbesondere betrifft die Erfindung eine triangulierende 3D-Messeinheit, die dann aus den aufgenommenen Bildern des Objektes beispielsweise computergestützt mittels einer geeigneten Auswertesoftware die 3D-Koordinaten des Objektes ermittelt.

Zur Vermessung von Objekten ist eine triangulierende optische Vermessung mit einer Bildaufnahmeeinheit und mit einem laserbasierten Mustergenerator hinreichend bekannt.

DE 10 2010 018 979 A1 beschreibt ein Verfahren und eine Vorrichtung zum Bestimmen der 3D-Koordinaten eines Objektes durch Abtasten der Oberfläche mit einem Linienscanner. Der Linienscanner umfasst einen Projektor mit einer Laserlichtquelle und eine Kamera zur Aufnahme einer von dem Projektor auf der Oberfläche des Objektes erzeugten Projektionslinie.

Ebenso zeigt DE 198 55 478 B4 ein Verfahren und eine Vorrichtung zur optischen Erfassung einer Kontrastlinie mit einem Laserscanner. Die Detektion der Kontrastlinie erfolgt dadurch, dass die Intensität des vom Laserscanner emittierten Strahls derart gesteuert wird, dass die Intensität des remittierten Strahls aus dem Detektor des Laserscanners stets einen konstanten Wert annimmt.

DE 10 2017 212 371 B4 schlägt zur Abtastung einer Szene durch einen Laserscanner vor, die Oberflächenkoordinaten nacheinander in mehreren Erfassungsprozessen zu erfassen, wobei die Frequenz einer wiederholten Bestrahlung der Szene mit Laserstrahlung und Erfassung der von der Szene reflektierten Strahlung durch den Laserscanner in den aufeinanderfolgenden Erfassungsprozessen unterschiedlich voneinander ist.

DE 10 2018 127 221 B4 beschreibt ein Koordinatenmesssystem mit einem Laserlinienscanner und einer Projektionseinheit. Der Laserlinienscanner erzeugt einen Laserstrahl, der durch eine geeignete Optik aufgefächert und auf die Oberfläche des Werkstücks als Laserlinie projiziert wird. Die Länge der Laserlinie definiert sich über einen Arbeitsabstand zwischen dem Scanmodul und der Werkstückoberfläche sowie einen Öffnungswinkel des aufgefächerten Laserstrahls.

DE 10 2018 211 913 A1 beschreibt eine Vorrichtung zum Erfassen einer Objektoberfläche mit einer Strahlerzeugungseinrichtung. Dabei wird elektromagnetische Strahlung mit mindestens zwei unterschiedlichen Wellenlängen auf eine Objektoberfläche projiziert, um separate Messwerte basierend auf den unterschiedlichen reflektierten Strahlungsanteilen mit jeder dieser Wellenlängen zu erzeugen. Das Auftreten von Strahlungsinterferenzen z. B. in Form von Speckle-Erscheinungen ist von der gewählten Wellenlänge der ausgesendeten Strahlung abhängig. Bei Speckle-Erscheinungen treten im bestrahlten Bereich der Objektoberfläche Flecken mit unterschiedlicher Strahlungsintensität auf. Sie können darauf zurückzuführen sein, dass es bei einer ausgesendeten Strahlung aufgrund von Wechselwirkung mit einer Optik der Strahlungserzeugungseinrichtung zu Interferenzen kommt. Durch die Nutzung von Strahlung mit mindestens zwei Wellenlängen wird die Wahrscheinlichkeit erhöht, dass die rückreflektierte Strahlung mindestens einer der Wellenlängen und der mindestens einer der daraus erzeugten Messwerte in einem gegenüber dem weiteren Messwert geringeren Ausmaß durch Speckle- oder andere wellenlängenabhängige Fehler verfälscht ist.

US 2011/0292406 A1 offenbart eine Messeinrichtung zur optischen Vermessung von Objekten mit einer Kamera und einer Laserprojektionseinheit, wobei die Leistung der Laserlichtquelle in Abhängigkeit der erfassten Intensität des rückreflektierten Lichts geändert wird, um die Intensität des rückreflektierten Lichts unabhängig von den Reflektionsgrad der untersuchten Objektoberfläche konstant zu halten.

DE 10 2012 113 021 A1 offenbart eine Messeinrichtung zur optischen Vermessung von Objekten mit einer Kamera und einer Laserprojektionseinheit zur Ausstrahlung breitbandiger Laserlichtstrahlung.

US 2019/0049237 A1 offenbart eine Messeinrichtung, bei der der Injektionsstrom und die Temperatur der Laserlichtquelle anhand eines detektierten Lichtsignals der Lichtquelle gesteuert wird, um die Wellenlänge der Laserlichtquelle konstant zu halten.

Ausgehend hiervon ist es Aufgabe der vorliegenden Erfindung, eine verbesserte Messeinrichtung zur optischen Vermessung von Objekten zu schaffen, die insbesondere Störungen durch Interferenzen reduziert.

Die Aufgabe wird mit der Messeinrichtung mit den Merkmalen des Anspruchs 1 und durch das Verfahren mit den Merkmalen des Anspruchs 11 gelöst. Vorteilhafte Ausführungsformen sind in den Unteransprüchen beschrieben.

Es wird vorgeschlagen, dass die Messeinrichtung zur Versorgung der Laserlichtquelle mit während jeweils einer Belichtungszeit der Bildaufnahmeeinheit variierender Treiberleistung, insbesondere variierendem Injektionsstrom und/oder variierender Treiberspannung, zur Erhöhung der Bandbreite der projizierten Laserwellenlängen eingerichtet ist.

Der unbestimmte Begriff "ein" ist im Sinne der vorliegenden Erfindung nicht als Zahlwort, sondern als unbestimmter Begriff im Sinne von "mindestens ein" zu verstehen.

Damit sind bei den durch "ein Element" bezeichneten Merkmalen auch mehrere solcher Elemente, wie bspw. mehrere Bildaufnahmeeinheiten bzw. eine Bildaufnahmeeinheit mit einer oder mehreren Kameras, Laserprojektionseinheiten und/oder Laserlichtquellen vom Sinngehalt mit umfasst. Zudem sind weitere andere Elemente nicht ausgeschlossen.

Durch die variierende Treiberleistung wird die während des Zeitraums, in dem die Bildaufnahme des Objekts durch eine Bildaufnahmeeinheit erfolgt, effektive spektrale Bandbreite der Lichtquelle erhöht, was zu einer Reduzierung von Störungen durch Mikrointerferenzen führt. Während der Bildaufnahme treten die Störungen zwar immer noch auf, werden aber für einen Wellenlängenbereich nur für sehr kurze Zeit aufgenommen und verändern sich durch die mit dem variierenden Injektionsstrom bewirkten Wellenlängenänderung. Damit verschmieren die abgeschwächten Störungen im Bild und sind nur noch wesentlich abgeschwächt sichtbar.

Durch die Variation des Injektionsstroms gelingt es, während der relativ kurzen Belichtungszeiten von Bildaufnahmeeinheiten in der Größenordnung von Millisekunden die Laserlichtquelle zu modulieren. Die variierende Stromstärke ändert die Temperatur, was zu einer Änderung der Resonatorlänge und damit zur Änderung der Wellenlänge führt. Dies ermöglicht eine langsame Modulation.

Durch die Variation der Treiberspannung ändert sich das Bändermodell der Laserdiode, was zu einer Änderung des Verstärkungsprofils und damit zu einer Änderung der Wellenlänge führt. Dies ermöglicht eine schnelle Modulation.

Je nach Bedarf kann die Variation der Treiberleistung entweder nur durch eine Variation des Injektionsstroms oder nur der Treiberspannung erfolgen, um wahlweise eine langsame oder schnelle Modulation zu erreichen. Denkbar ist aber auch eine Kombination durch Variation des Injektionsstroms und der Treiberspannung zur Variation der Treiberleistung, um die unterschiedlichen Effekte mit den unterschiedlichen Zeitverhalten miteinander zu vereinen.

Anstatt wie üblich die Laserlichtquelle, insbesondere eine Laserdiode, mit einem konstanten Injektionsstrom zu betreiben, wird die Stromstärke während der Belichtungszeit der Bildaufnahmeeinheit moduliert. Dabei sorgen mindestens zwei Effekte für die Variation der ausgesendeten Wellenlänge:
a) Thermische Modulation der Laser-Junction-Temperatur durch veränderten Wärmeeintrag durch die vom Strom verursachten Verluste. Dabei verändert sich die Länge des durch den Halbleiterlaser aufgebauten Laserresonators, und damit die Wellenlänge. Hierbei gilt, dass die Wellenlänge mit zunehmender Temperatur langwelliger wird.
b) Verschiebung des Energieniveaus des Halbleiterübergangs der Laserdiode abhängig von der modulierten Stromdichte. Dies ist unter dem sogenannten Quantum-confined-Stark-Effekt bekannt. Dadurch ändert sich die Energie und somit die Wellenlänge der induzierten Photonen am Halbleiter. Dieser Effekt ist abhängig vom Halbleitermaterial. Bei blauen Laserdioden wird die Wellenlänge mit höherer Stromdichte verkürzt. Bei roten Laserdioden ist der Effekt invers. Höhere Ströme erzeugen größere Wellenlängen.
c) Ein besonders großer Effekt ergibt sich in Kombination mit einer durch kurzen Puls verkürzten Wellenlänge mit darauf folgender Erwärmung und somit vergrößerten Wellenlänge.

Durch die Variation des Injektionsstroms gelingt es, die Bandbreite der projizierten Laserwellenlängen zu erhöhen, indem die Wellenlänge der Laserlichtquelle durch den variierenden Injektionsstrom sehr schnell geändert wird.

Die Laserlichtquelle kann vorzugsweise ein Halbleiterlaser sein. Damit können die oben genannten Effekte der thermischen Modulation und des Quantum-confined-Stark-Effekts genutzt werden.

Eine besonders einfache Modulation der Laserlichtquelle mit einem variierenden Injektionsstrom gelingt durch einen pulsmodulierten Injektionsstrom. Dabei darf der Injektionsstrom sogar stark erhöht sein und oberhalb des zulässigen Stroms für die Laserlichtquelle liegen, solange die Energie unterhalb des Schädigungsniveaus der Laserlichtquelle (z. B. Laserdiode) ist.

Die Pulsmodulierung kann beispielsweise durch Pulsweiten-Modulation, Pulsdichte-Modulation und dergleichen des Injektionsstroms und/oder der Treiberspannung erfolgen. Denkbar sind aber auch andere Pulsformen, wie ein dreieckförmiger, sägezahnförmiger oder sinusförmiger Injektionsstromverlauf bzw. Treiberspannungsverlauf.

Eine Variation des Injektionsstroms kann auch durch zeitlich geformte Injektionsstrompulse durchgeführt werden, die in jeweils einem Stromimpuls eine sich ändernde Stromstärke haben. Mit einer solchen Strom-Puls-Formung kann die Effizienz weiter verbessert und die Strombelastung für die Laserlichtquelle reduziert werden. Entsprechendes gilt für die Variation der Treiberspannung durch zeitlich geformte Treiberspannungs-Pulse.

Die Laserprojektionseinheit kann zur Stromversorgung der Laserlichtquelle mit modulierten Strompulsen mit Pulsfolgen im Bereich von 10 Nanosekunden bis 10 Mikrosekunden und einem Tastverhältnis im Bereich von 5 bis 500 eingerichtet sein. Damit gelingt es, auf besonders effiziente und zuverlässige Weise innerhalb der für die optische Vermessung üblichen kurzen Belichtungszeiten eine zur Vermeidung von Effekten durch Mikrointerferenzen hinreichend große Bandbreite der vom Laserlicht auf das Objekt aufprojizierten Laserwellenlängen zu erreichen.

Die Laserprojektionseinheit kann zur Projektion von blauem Laserlicht im Wellenlängenbereich von 440 bis 470 Nanometer eingerichtet sein. Bei blauem Licht in diesem Wellenlängenbereich ist der sich durch die Variation des Injektionsstroms ergebende Effekt der Wellenlängenänderung sehr deutlich.

Die Laserprojektionseinheit kann ein diffraktiv optisches Element (DOE), eine PowelLinse und/oder ein wellenlängenlängenabhängiges Gitter haben, durch das von der Laserlichtquelle erzeugtes Laserlicht geleitet wird. Damit kann der Effekt des Verschmierens der Mikrointerferenzpunkte, der durch die Wellenlängenänderung während der Bildaufnahme bewirkt wird, bereits vor dem Lichtaustritt durch Interferenzen an dem DOE oder Gitter weiter verstärkt werden. Bei einem diffraktiv optischem Element DOE sind niedrige Ordnungen sinnvoll, um eine übermäßig starke Verschmierung der Laserlinien zu vermeiden.

Als Laserprojektionseinheit bietet sich beispielsweise ein Laserliniengenerator, ein Multiliniengenerator oder ein Random-Dot-Matrix-Generator an. Denkbar sind auch andere Typen von Laserprojektionseinheiten.

Die durch Mikrointerferenzen verursachten Effekte können weiter dadurch reduziert werden, dass die Laserlichtquelle an eine Lichtleitfaser angeschlossen ist. Der Weglängenunterschied führt dann bei verschiedenen Wellenlängen durch die Lichtleitfaser zu einer deutlichen Veränderung der räumlichen und zeitlichen Kohärenz. Dies ist abhängig von der Länge der Lichtleitfaser, die ausreichend lang gewählt werden sollte, um einen wahrnehmbaren Effekt zu erzielen. Das in die Lichtleitfaser eingekoppelte Licht wird durch Multireflexionen in der Lichtleitfaser gemischt. Jede Teilwellenlänge hat auf dem Weg durch das Fasermaterial ihre eigenen Reflexionswinkel und damit Weglängen. Je nach Faserlänge wird der Weglängenunterschied größer, was dazu führt, dass das den Lichtleiter verlassende Licht am Lichtaustritt im Vergleich zum eingekoppelten Licht einen räumlich und zeitlich verminderten Kohärenzgrad hat. Dieser Prozess ist über einen definierten Zeitraum zu betrachten, in dem die Wellenlängenänderungen stattfinden.

Eine zusätzliche Verstärkung dieses Effektes kann durch Verlegen der Lichtleitfasern in Form von Schlingen erreicht werden.

Das aus der Lichtleitfaser austretende Laserlicht kann durch eine optische Linse kollimiert werden. Das kollimierte punktförmige Laserlicht kann durch eine Powellinse geleitet werden, um eine Laserlinie zu erzeugen.

Die Erfindung wird nachfolgend anhand der beigefügten Zeichnungen mit einem Ausführungsbeispiel näher erläutert. Es zeigen:
- Figur 1 -: Blockdiagramm einer Messeinrichtung zur optischen Vermessung von Objekten mit einer Kamera und einer Laserprojektionseinheit;
- Figur 2 -: beispielhaftes Diagramm einer von der Injektionsstromstärke abhängigen spektralen Bandbreite einer Laserdiode;
- Figur 3 -: Diagramm eines beispielhaften Phasenkontrastes in Abhängigkeit von dem normierten Strahldurchmesser zur Bestimmung der räumlichen Kohärenz;
- Figur 4 -: Skizze eines auf ein Objekt gerichteten und durch ein diffraktives optisches Element geleiteten Laserstrahls mit zwei verschiedenen Wellenlängen;
- Figur 5 -: Skizze einer Laserlichtquelle mit daran angeschlossener Lichtleitfaser zur Verminderung des Kohärenzgrades;
- Figur 6 -: Skizze einer Anordnung aus Laserlichtquelle, Lichtleitfaser, Kollimationslinse und Powellinse zur Erzeugung einer Laserlinie.

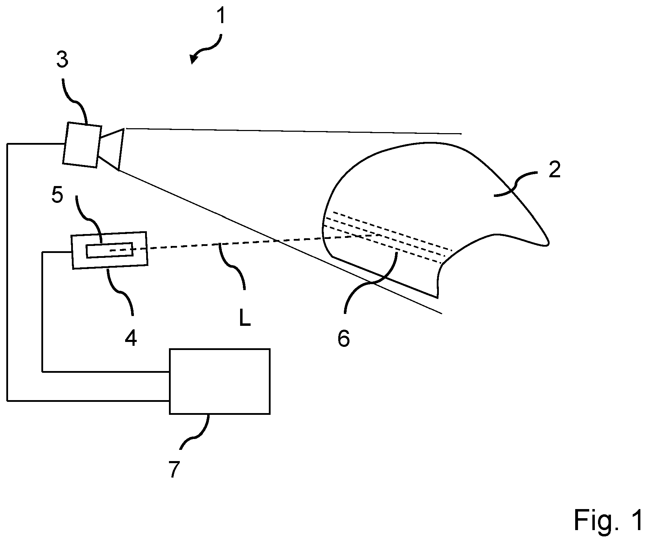

Figur 1 lässt ein Blockdiagramm einer Messeinrichtung 1 zur optischen Vermessung von Objekten 2 mit einer Bildaufnahmeeinheit 3 und einer Laserprojektionseinheit 4 erkennen. Dabei ist es denkbar, dass die Bildaufnahmeeinheit eine einzige Kamera oder mehrere Kameras, wie beispielsweise eine Stereokamera, zur Aufnahme des Objektes 2 oder eines Teils des Objektes 2 nutzt.

Die Laserprojektionseinheit 4 hat eine Laserlichtquelle 5, die zur Emission eines Laserlichtstrahls ausgebildet ist. Die Laserlichtquelle 5 kann beispielsweise einen Halbleiterlaser aufweisen.

Die Laserprojektionseinheit 4 ist, ebenso wie die Bildaufnahmeeinheit 3, so auf das Objekt 2 ausgerichtet, dass der Laserlichtstrahl L auf die Oberfläche des Objektes 2 aufritt und die Oberfläche beleuchtet. Die Bildaufnahmeeinheit 3 ist auf die Oberfläche des Objektes 2 so ausgerichtet, dass sie die aufprojizierten Laserlichtstrukturen, wie beispielsweise Linien 6, aufnimmt, so dass die derart aufgenommenen Bilder mittels triangulierender Verfahren zur Ermittlung von Eigenschaften der Oberfläche des Objektes, wie beispielsweise Objektkoordinaten, genutzt werden können.

Aufgrund der kohärenten Eigenschaften des Laserlichtes entstehen auf der beleuchteten Oberfläche des Objektes 2 Interferenzerscheinungen. Diese werden auch als Mikrointerferenz-Punkte bezeichnet. Sie entstehen durch von nichtspiegelnden Oberflächen reflektierten kohärente Laserlichtbündel. Die Größen dieser Mikrointerferenz-Punkte korrelieren mit der Wellenlänge, der zeitlichen und räumlichen Kohärenzlänge und der Rauigkeiten der reflektierenden Oberfläche. Mikrointerferenz-Punkte verfälschen durch konstruktive oder destruktive Interferenz das Messergebnis. Für das menschliche Auge oder eine Bildaufnahmeeinheit 3 stellt sich somit ein großer Kontrastunterschied dar. Auch ist die Position eines Mikrointerferenz-Punktes abhängig von dem Winkel und der Entfernung, in der ein Mikrointerferenz-Punkt betrachtet wird. Bei der Betrachtung ein- und desselben Mikrointerferenz-Punkts mit einer Bildaufnahmeeinheit 3, die zwei Kameras hat, aus der jeweils einen anderen Richtung befindet sich für jede dieser Kameras die Position des Mikrointerferenz-Punktes an einer anderen Position.

Die Bildaufnahmeeinheit 3 und die Laserprojektionseinheit 4 sind an eine Steuereinheit 7 angeschlossen, die zur Ansteuerung der Laserprojektionseinheit 5 und der Bildaufnahmeeinheit 3 ausgebildet ist. Die von der Bildaufnahmeeinheit 3 aufgenommenen Bilder können von der Steuereinheit 7 empfangen und zumindest zwischengespeichert werden. Die Steuereinheit 7 kann zusätzlich auch eine Auswerteeinheit haben und beispielsweise durch eine geeignetes Computerprogramm eingerichtet sein, um die mit der Bildaufnahmeeinheit 3 aufgenommenen Bilder triangulierend auszuwerten.

Die Messeinrichtung 1 ist eingerichtet, die Laserlichtquelle 5 der Laserprojektionseinheit 4 während jeweils einer Belichtungszeit der Bildaufnahmeeinheit 3 mit einem variierenden Injektionsstrom zu versorgen, um auf diese Weise die Bandbreite der projizierten Laserwellenlängen des Laserstrahls L zu erhöhen. Die Variation des Injektionsstroms kann durch eine Elektronik der Laserprojektionseinheit 4 erfolgen. Sie kann auch durch die Steuereinheit 7 oder durch eine von der Steuereinheit 7 vorgegebene Modulation in Kombination mit einer Elektronik der Laserprojektionseinheit 4 erfolgen.

Durch die Versorgung der Laserlichtquelle mit einem variierenden Injektionsstrom wird die Stromstärke während der Belichtungszeit der Bildaufnahmeeinheit 3 moduliert und damit die ausgesendete Wellenlänge des Laserlichtstrahls L variiert.

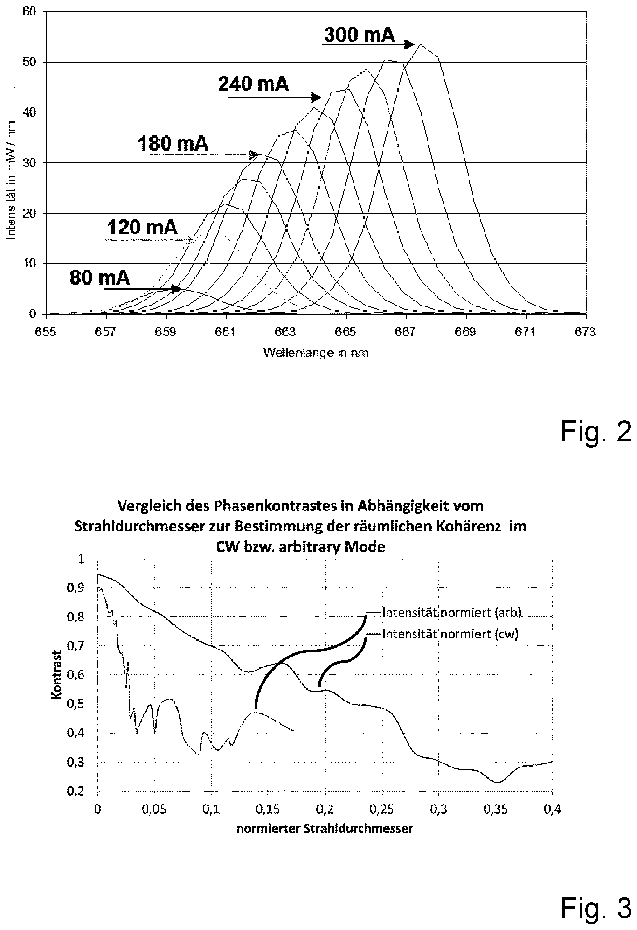

Der hierfür genutzte Zusammenhang der thermischen Modulation der Laser-Junction-Temperatur durch einen veränderten Wärmeeintrag durch die vom Strom verursachten Verluste sowie die Verschiebung des Energieniveaus des Halbleiterübergangs der Laserdiode, abhängig von der modulierten Stromdichte, werden anhand der Figur 2 und 3 erläutert.

Figur 2 zeigt ein beispielhaftes Diagramm von spektraler Bandbreite einer Laserdiode, die von der Injektionsstromstärke abhängig ist.

Jeder Laser hat eine definierte spektrale Breite, die unter anderem von der Injektionsstromstärke und der Kühlung der Laserdiode abhängt. Aus dem beispielhaften Diagramm der Figur 2 sind verschiedene Spektren einer Laserdiode bei unterschiedlicher Bestromung zu erkennen. Dabei wird eine deutliche Peak-Wellenlänge mit variierender Injektionsstromstärke sichtbar. So vergrößert sich die Peak-Wellenlänge mit zunehmendem Injektionsstrom. Zugleich nimmt auch die Intensität des durch den Laser emittierten Laserlichtes mit zunehmendem Injektionsstrom zu.

Zusätzlich nimmt die Wellenlänge auch über den kurzen Zeitraum der Erwärmung des Lasers zu, selbst wenn der Strom konstant ist. Dieser dynamische Effekt hilft zusätzlich bei der Erhöhung der Bandbreite. Bei den relativ kurzen Belichtungszeiten ist dieser Effekt aber nicht ausreichend, so dass diese inhärente Eigenschaft durch Variation der Treiberleistung verstärkt wird.

Figur 3 zeigt ein Diagramm eines beispielhaften Phasenkontrastes in Abhängigkeit von dem normierten Strahldurchmesser zur Bestimmung der räumlichen Kohärenz.

Durch die Erhöhung der Temperatur aufgrund eines höheren Injektionsstroms verlängert sich ein durch ein Halbleiterelement aufgebauter Laserresonator des Halbleiterlasers und verkleinert sich die Bandlücke des p-n-Übergangs, was zu einer Verschiebung der Peak-Wellenlängen in langwelligere Wellenbereiche führt. Durch eine geeignete Modulation der Injektionsstromstärke in ihrer Amplitude werden verschiedene Wellenlängen von der Laserdiode emittiert. Zeitlich gemittelt ergibt sich hieraus ein Summenspektrum.

Wenn nun über die Summenspektren, moduliert über Stromstärkeänderungen, die Kohärenz ermittelt wird, so kann eine Verminderung der Kohärenz festgestellt werden.

Dies ist in Figur 3 zu erkennen. Dort ist die räumliche (laterale) Kohärenz dargestellt, die einerseits als modulierte (ARB) oder andererseits als im Dauerbetrieb (CW) gemessene normierte Intensität dargestellt ist.

Es ist deutlich zu erkennen, dass ein Unterschied zum Kohärenzgrad besteht. Die erreichte Verkürzung der Kohärenz führt durch eine Variation des Injektionsstroms zu einer Reduzierung der Mikrointerferenzen.

Der Einfluss der Änderungen der in der Wellenlänge auf den durch Mikrointerferenzen bewirkten Kontrast kann durch die Verwendung eines sogenannten diffraktiven optischen Elementes DOE und/oder auch durch ein wellenlängenabhängiges Gitter verstärkt werden.

Solche optischen Elemente, wie insbesondere optische wellenlängenabhängige Gitter, lenken das Laserlicht in verschiedene Bewegungsordnungen. Der Winkel der Umlenkung ist sowohl durch die Gitterkonstante als auch durch die Wellenlänge definiert. Bei konstanter Gitterkonstante, aber sich ändernder Teilwellenlänge werden die Laserstrahlen unterschiedlich gebeugt bzw. abgelenkt.

Bei einer Wellenlänge λ1 werden die Laserstrahlen auf einen Auftreffpunkt auf einer Oberfläche abgelenkt. Das reflektierte kohärente Laserlicht erzeugt mehrere Mikrointerferenz-Punkte vor der Oberfläche, welche mit einer Bildaufnahmeeinheit 3 detektiert werden.

Durch die Änderung des Injektionsstroms bei der Versorgung der Laserlichtquelle und damit der Wellenlänge der Laserlichtquelle wird das gleiche Strahlenbündel, welches vorher in dem Auftreffpunkt abgelenkt wurde, in einen neuen, verschobenen Auftreffpunkt auf der Oberfläche abgelenkt. Dies hat zu Folge, dass sich die durch Mikrointerferenzen bewirkten Punkte verschieben und neue Punkte erzeugen, welche die Bildaufnahmeeinheit 3 detektiert.

Durch die Variationen des Injektionsstroms während der Beleuchtungszeit der Bildaufnahmeeinheit 3 führt die während der Belichtungszeit durchgeführte Wellenlängenänderung im Kamerabild zu einer Verschmierung der sich durch die Variationen des Injektionsstroms verschiebenden Mikrointerferenz-Punkte.

Je mehr Wellenlängenänderungen innerhalb einer Belichtungszeit der Bildaufnahmeeinheit 3 durchgeführt werden, umso besser werden die störenden Mikrointerferenz-Punkte verschmiert und somit zeitlich herausgemittelt. Dies kann auch als eine Winkeldiversifikation innerhalb eines definierten Zeitfensters, d. h. der Belichtungszeit der Bildaufnahmeeinheit 3, bezeichnet werden.

Durch eine Änderung der Laserdioden-Wellenlänge sowohl thermisch als auch durch den Quantum-confined-Stark-Effekt kann eine Verminderung der Kohärenz und damit der Mikrointerferenz-Punkte erzeugt werden. Dieser Effekt kann durch die wellenlängenabhängige Winkeldiversifikation an einem Gitter zeitlich gemittelt noch weiter verstärkt werden.

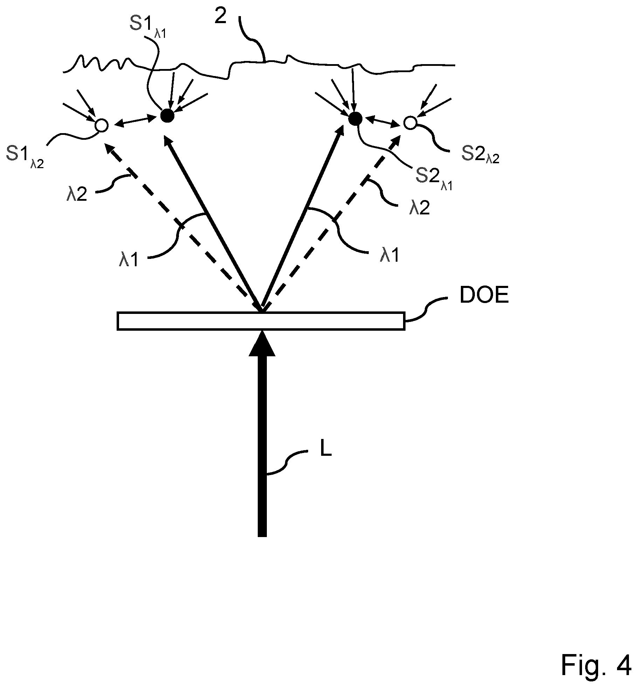

Figur 4 zeigt eine Skizze eines Laserstrahls mit zwei verschiedenen Wellenlängen λ1 und λ2, der auf ein Objekt 2 gerichtet ist und durch ein diffraktives optisches Element DOE geleitet wird. Der durchgehende Laserstrahl 0ter Beugungsordnung (nicht dargestellt) trifft auf der (unebenen) Oberfläche an einem ersten Auftreffpunkt auf. Dabei entstehen durch die Laufzeitunterschiede des Laserstrahls am Auftreffpunkt durch die Oberflächenrauheit bedingte Interferenzen mit Mikrointerferenz-Punkten.

Durch die Beugung am diffraktiven optischen Element DOE entstehen weitere, zum Hauptauftreffpunkt verschobene Auftreffpunkte der Laserstrahlen höherer Beugungsordnung auf. Dargestellt sind die Laserstrahlen erster Beugungsordnung, die im spitzen Winkel zum durchgehenden Laserstrahl erster Ordnung schräg aus dem diffraktiven optischen Element DOE austreten. Der Austrittswinkel der Laserstrahlen höherer Ordnung und damit die Auftreffpunkte auf dem Objekt sind von der Wellenlänge λ1 und λ2 abhängig.

Es entstehen vor dem Objekt 2 jeweils Mikrointerferenz-Punkte S1_{λ1}, S2_{λ1} mit der ersten Wellenlänge λ1 und diesbezüglich verschobene Mikrointerferenz-Punkte S1_{λ2}, S2_{λ2} mit der zweiten Wellenlänge λ2.

An dem Haupt-Auftreffpunkt treten aufgrund der Höhenunterschiede an der Oberfläche die genannten wellenlängenabhängigen Verschiebungen der Mikrointerefernz-Punkte auch dort um den Haupt-Auftreffpunkt herum in entsprechender Weise auf. Dies ist der Übersicht halber nicht skizziert.

Daher hat eine Variation der Wellenlänge bei der Aufnahme eines Bildes auch ohne die mit dem diffraktiven optischen Element DOE verursachten Beugungseffekte einen Effekt für den durchgehenden Hauptlaserstrahl 0ter Beugungsordnung.

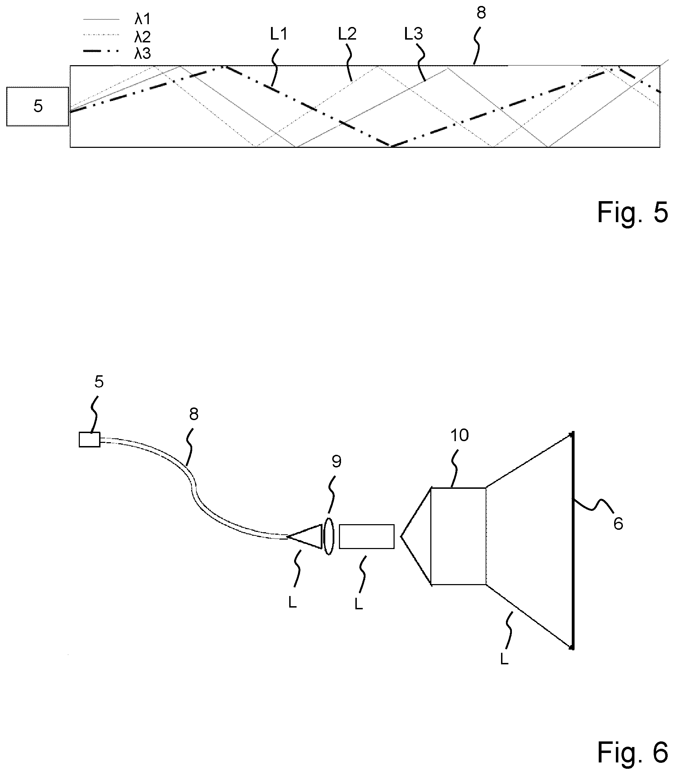

Figur 5 lässt eine Skizze einer Laserlichtquelle 5 mit daran angeschlossener Lichtleitfaser 8 erkennen, durch die das eingekoppelte Laserlicht L der Laserlichtquelle 5 durch Multireflexionen gemischt und das aus der Lichtleitfaser 8 austretende Laserlicht L einen im Vergleich zum eingekoppelten Laserlicht räumlich und zeitlich deutlich verminderten Kohärenzgrad hat. Es wird deutlich, dass der Weglängenunterschied des Laserlichtes L1, L2, L3 bei verschiedenen Wellenlängen λ1, λ2, λ3 durch die Lichtleitfaser 8 zu einer deutlichen Veränderung der räumlichen und zeitlichen Kohärenz führt. Das Licht L1, L2, L3 in der Lichtleitfaser 8 wird durch Multireflexionen gemischt. Jede Teilwellenlänge λ1, λ2, λ3 hat auf ihrem Weg durch das Fasermaterial ihre eigenen Reflexionswinkel und damit Weglängen. Je nach Faserlänge wird der Weglängenunterschied größer, was dazu führt, dass das die Lichtleitfaser 8 (Lichtleiter) verlassende Laserlicht L einen räumlich und zeitlich deutlich verminderten Kohärenzgrad aufweist. Dies kann zusätzlich dadurch verstärkt werden, dass die Lichtleitfaser 8 in Form von Schlingen verlegt wird, d. h. auf einer gewundenen kreisförmigen oder mäanderförmigen Bahn. Dieser Effekt ist über den definierten Zeitraum zu betrachten, in dem die Wellenlängenänderungen stattfinden. Über einen Belichtungszeitraum, in dem die Treiberleistung bspw. durch Variation des Injektionsstroms und/oder der Treiberspannung verändert wird, wird ein Summenspektrum aus allen Teilwellenlängen erzeugt. Dies führt zeitlich gemittelt zu einer Verbreiterung des Gesamtspektrums und damit zu einer Verkürzung der Kohärenzlänge, was zu einer Verringerung von Mikrointerferenzen und den damit verbundenen Effekten führt.

Figur 6 zeigt eine Skizze einer Anordnung aus Laserlichtquelle 5, Lichtleitfaser 8, Kollimiationslinse 9 und Powellinse 10 zur Erzeugung einer Laserlinie. Das emittierte Laserlicht L aus der Laserlichtquelle 5 wird direkt in eine Lichtleitfaser 8 eingekoppelt, um den Kohärenzgrad zu verringern. Das am Ende der Lichtleitfaser 8 emittierte Laserlicht L wird über eine optische Linse 9 kollimiert und auf eine Powellinse 10 gelenkt. Diese Powellinse 10 wiederum erzeugt aus der Punktlichtquelle eine Laserlinie 6, die auf ein zu vermessendes Objekt 2 projiziert und genutzt wird, um im Messsystem Oberflächendaten zu erzeugen. Für die kameraseitige eindeutige und möglichst genaue Erkennung der Laserlinie 6 und Bestimmung der Linienmitte sollte die Laserlinie 6 möglichst rauschfrei sein. Durch Mikrointerferenzen verursachte Punkte, die sich für verschiedene Materialien unterschiedlich verhalten, verschlechtern das Detektionsergebnis deutlich. Eine durch die beschriebene Lasermodulation erzeugte Verminderung der Mikrointerferenzen wirkt sich dementsprechend positiv auf das Messergebnis aus.

## Patentansprüche

1. Messeinrichtung (1) zur optischen Vermessung von Objekten (2) mit einer Kamera (3) und einer Laserprojektionseinheit (4), die eine Laserlichtquelle (5) hat, wobei die Laserprojektionseinheit (4) zum Aufprojizieren von Laserlicht (L) auf ein zu vermessendes Objekt (2) und die Kamera (3) zur Bildaufnahme des Objektes (2) mit dem aufprojizierten Laserlicht (L) ausgebildet ist,
**dadurch gekennzeichnet, dass**
die Messeinrichtung (1) zur Versorgung der Laserlichtquelle (5) mit einer während jeweils einer Belichtungszeit der Kamera (3) variierenden Treiberleistung, insbesondere variierendem Injektionsstrom und/oder Treiberspannung, zur Erhöhung der Bandbreite der projizierten Laserwellenlängen eingerichtet ist.

2. Messeinrichtung (1) nach Anspruch 1, **dadurch gekennzeichnet, dass** die Laserlichtquelle (5) ein Halbleiterlaser ist.

3. Messeinrichtung (1) nach Anspruch 1 oder 2, **dadurch gekennzeichnet, dass** die Laserprojektionseinheit (4) zur Versorgung der Laserlichtquelle (5) mit einem pulsmodulierten Injektionsstrom, einem dreieckförmigen, sägezahnförmigen oder sinusförmigen Injektionsstromverlauf oder mit zeitlich geformten Injektionsstrompulsen und/oder Spannungspulsen, die in jeweils einem Stromimpuls eine sich ändernde Stromstärke bzw. in einem Spannungspuls eine sich ändernde Spannung haben, eingerichtet ist.

4. Messeinrichtung (1) nach einem der Ansprüche 1 bis 3, **dadurch gekennzeichnet, dass** die Laserprojektionseinheit (4) zur Versorgung der Laserlichtquelle (5) mit modulierten Strom- und/oder Spannungspulsen mit Pulsfolgen im Bereich von 10 Nanosekunden bis 10 Mikrosekunden und einem Tastverhältnis im Bereich vom 5 bis 500 eingerichtet ist.

5. Messeinrichtung (1) nach einem der Ansprüche 1 bis 4, **dadurch gekennzeichnet, dass** die Laserprojektionseinheit (4) zur Projektion von blauem Laserlicht im Wellenlängenbereich von 440 bis 470 Nanometer eingerichtet ist.

6. Messeinrichtung (1) nach einem der Ansprüche 1 bis 5, **dadurch gekennzeichnet, dass** die Laserprojektionseinheit (4) ein diffraktiv optisches Element (DOE), eine Powell-Linse und/oder ein wellenlängenlängenabhängiges Gitter hat, durch das von der Laserlichtquelle (5) erzeugtes Laserlicht geleitet wird.

7. Messeinrichtung (1) nach einem der Ansprüche 1 bis 6, **dadurch gekennzeichnet, dass** die Laserprojektionseinheit (4) ein Laserliniengenerator, ein Multiliniengenerator oder ein Random-Dot-Matrix-Generator ist.

8. Messeinrichtung nach einem der vorhergehenden Ansprüche, **dadurch gekennzeichnet, dass** die Laserlichtquelle (5) an eine Lichtleitfaser (8) angeschlossen ist.

9. Messeinrichtung nach Anspruch 8, **dadurch gekennzeichnet, dass** die Lichtleitfaser (8) schlingenförmig gewunden ist.

10. Messeinrichtung nach Anspruch 8 oder 9, **dadurch gekennzeichnet, dass** der Ausgang der Lichtleitfaser (8) auf eine optische Linse (9) zur Kollimation des Laserlichts (L) und das aus der optischen Linse (9) austretende kollimierte Laserlicht (L) auf eine Powellinse (10) zur Erzeugung einer Laserlinie (6) geführt ist.

11. Verfahren zur optischen Vermessung von Objekten (2) mittels Projektion von Laserlicht mit einer Laserprojektionseinheit (4), die eine Laserlichtquelle (5) hat, auf das zu vermessende Objekt (2) und mittels Bildaufnahme des Objektes (2) mit dem aufprojizierten Laserlicht (L) mit einer Kamera, **dadurch gekennzeichnet, dass** die Laserlichtquelle (5) während jeweils einer Belichtungszeit der Kamera (3) mit einer variierenden Treiberleistung, insbesondere einem variierenden Injektionsstrom und/oder einer variierenden Treiberspannung, zur Erhöhung der Bandbreite der projizierten Laserwellenlängen betrieben wird.

12. Verfahren nach Anspruch 11, **gekennzeichnet durch** Betreiben der Laserlichtquelle (5) mit einem pulsmodulierten Injektionsstrom, einem dreieckförmigen, sägezahnförmigen oder sinusförmigen Injektionsstromverlauf oder mit zeitlich geformten Injektionsstrompulsen und/oder Spannungspulsen, die in jeweils einem Stromimpuls eine sich ändernde Stromstärke bzw. in einem Spannungspuls eine sich ändernde Spannung haben.

13. Verfahren nach Anspruch 12, **dadurch gekennzeichnet, dass** der Injektionsstrom während der Belichtungszeit mindestens eine Vollwelle des Injektionsstromverlaufs umfasst.

14. Verfahren nach einem der Ansprüche 11 bis 13, **dadurch gekennzeichnet, dass** die Laserlichtquelle (5) ein Halbleiterlaser ist.

15. Verfahren nach einem der Ansprüche 11 bis 14, **gekennzeichnet durch** Betreiben der Laserlichtquelle (5) mit modulierten Strom- und/oder Spannungspulsen mit Pulslängen im Bereich von 10 Nanosekunden bis 10 Mikrosekunden und einem Tastverhältnis im Bereich von 5 bis 500.

16. Verfahren nach einem der Ansprüche 11 bis 15, **gekennzeichnet durch** Projizieren von Laserlicht (L) auf das zu vermessende Objekt (2) mit der Laserlichtquelle (5) im Wellenlängenbereich von 440 bis 470 Nanometer.

17. Verfahren nach einem der Ansprüche 11 bis 16, **gekennzeichnet durch** Einkoppeln des Laserlichts (L) der Laserlichtquelle (5) in eine Lichtleitfaser (8) zur Mischung des eingekoppelten Laserlichts (L) durch Multireflexionen in der Lichtleitfaser (8) derart, dass das die Lichtleitfaser (8) verlassende Licht am Lichtaustritt der Lichtleitfaser (8) im Vergleich zum eingekoppelten Laserlicht (L) einen räumlich und zeitlich verminderten Kohärenzgrad hat.

18. Verfahren nach Anspruch 17, **gekennzeichnet durch** Führen des Laserlichts (L) in der Lichtleitfaser (8) in Schlingen auf einer mindestens in Teilstrecken gekrümmten Bahn.

19. Verfahren nach Anspruch 17 oder 18, **gekennzeichnet durch** Kollimieren des aus der Lichtleitfaser (8) austretenden Laserlichts (L) und Erzeugen einer Laserlinie (6) aus dem kollimierten punktförmigen Laserlicht (L) mittels einer Powellinse (10).

## Claims

1. Measuring device (1) for optically measuring objects (2), comprising a camera (3) and a laser projection unit (4) having a laser light source (5), wherein the laser projection unit (4) is configured for projecting laser light (L) onto an object (2) to be measured and the camera (3) is configured to record images of the object (2) with the projected laser light (L),
**characterized in that**
the measuring device (1) is designed to supply the laser light source (5) with a driver power varying during an exposure time of the camera (3) in each case, in particular varying injection current and/or driver voltage, to increase the bandwidth of the projected laser wavelengths.

2. Measuring device (1) according to Claim 1, **characterized in that** the laser light source (5) is a semiconductor laser.

3. Measuring device (1) according to Claim 1 or 2, **characterized in that** the laser projection unit (4) is designed to supply the laser light source (5) with a pulse-modulated injection current, a triangular, sawtooth-shaped or sinusoidal injection current profile or with temporally shaped injection current pulses and/or voltage pulses, which have a varying current in in each case one current pulse or a varying voltage in one voltage pulse.

4. Measuring device (1) according to any of Claims 1 to 3, **characterized in that** the laser projection unit (4) is designed to supply the laser light source (5) with modulated current pulses and/or voltage pulses having pulse sequences ranging from 10 nanoseconds to 10 microseconds and a duty cycle ranging from 5 to 500.

5. Measuring device (1) according to any of Claims 1 to 4, **characterized in that** the laser projection unit (4) is designed to project blue laser light in the wavelength range from 440 to 470 nanometres.

6. Measuring device (1) according to any of Claims 1 to 5, **characterized in that** the laser projection unit (4) has a diffractive optical element (DOE), a Powell lens and/or a wavelength-dependent grating, through which laser light generated by the laser light source (5) is guided.

7. Measuring device (1) according to any of Claims 1 to 6, **characterized in that** the laser projection unit (4) is a laser line generator, a multi-line generator or a random dot matrix generator.

8. Measuring device according to any of the preceding claims, **characterized in that** the laser light source (5) is connected to an optical fibre (8).

9. Measuring device according to Claim 8, **characterized in that** the optical fibre (8) is coiled in a loop-shaped manner.

10. Measuring device according to Claim 8 or 9, **characterized in that** the exit of the optical fibre (8) is guided onto an optical lens (9) for collimating the laser light (L) and the collimated laser light (L) exiting the optical lens (9) is guided onto a Powell lens (10) for generating a laser line (6).

11. Method for optically measuring objects (2) by means of projecting laser light onto the object (2) to be measured using a laser projection unit (4) having a laser light source (5), and by means of recording images of the object (2) with the projected laser light (L) using a camera, **characterized in that** the laser light source (5) is operated during an exposure time of the camera (3) in each case with a varying driver power, in particular a varying injection current and/or a varying driver voltage, to increase the bandwidth of the projected laser wavelengths.

12. Method according to Claim 11, **characterized by** operating the laser light source (5) with a pulse-modulated injection current, a triangular, sawtooth-shaped or sinusoidal injection current profile or with temporally shaped injection current pulses and/or voltage pulses, which have a varying current in in each case one current pulse or a varying voltage in one voltage pulse.

13. Method according to Claim 12, **characterized in that** the injection current comprises during the exposure time at least one full wave of the injection current profile.

14. Method according to any of Claims 11 to 13, **characterized in that** the laser light source (5) is a semiconductor laser.

15. Method according to any of Claims 11 to 14, **characterized by** operating the laser light source (5) with modulated current pulses and/or voltage pulses having pulse lengths ranging from 10 nanoseconds to 10 microseconds and a duty cycle ranging from 5 to 500.

16. Method according to any of Claims 11 to 15, **characterized by** projecting laser light (L) onto the object (2) to be measured with the laser light source (5) in the wavelength range from 440 to 470 nanometres.

17. Method according to any of Claims 11 to 16, **characterized by** coupling the laser light (L) from the laser light source (5) into an optical fibre (8) to mix the input-coupled laser light (L) by multi-reflections in the optical fibre (8) in a manner such that the light leaving the optical fibre (8) has at the light exit of the optical fibre (8) a degree of coherence which is reduced spatially and temporally compared with the input-coupled laser light (L).

18. Method according to Claim 17, **characterized by** guiding the laser light (L) in the optical fibre (8) in loops along a path which is curved at least in sections.

19. Method according to Claim 17 or 18, **characterized by** collimating the laser light (L) exiting the optical fibre (8) and generating a laser line (6) from the collimated point-type laser light (L) by means of a Powell lens (10).

## Revendications

1. Dispositif de mesure (1) destiné à la mesure optique d'objets (2) comprenant une caméra (3) et une unité de projection laser (4), qui comporte une source de lumière laser (5), l'unité de projection laser (4) étant configurée pour projeter de la lumière laser (L) sur un objet (2) à mesurer et la caméra (3) pour capturer une image de l'objet (2) avec la lumière laser (L) projetée sur celui-ci,
**caractérisé en ce que**
le dispositif de mesure (1) est conçu pour alimenter la source de lumière laser (5) avec une puissance de circuit d'attaque qui varie pendant respectivement un temps d'exposition de la caméra (3), en particulier un courant d'injection et/ou une tension d'attaque qui varient, afin d'augmenter la largeur de bande des longueurs d'onde laser projetées.

2. Dispositif de mesure (1) selon la revendication 1, **caractérisé en ce que** la source de lumière laser (5) est un laser à semiconducteur.

3. Dispositif de mesure (1) selon la revendication 1 ou 2, **caractérisé en ce que** l'unité de projection laser (4) est conçue pour alimenter la source de lumière laser (5) avec un courant d'injection modulé par impulsions, une courbe de courant d'injection triangulaire, en dents de scie ou sinusoïdale, ou avec des impulsions de courant d'injection et/ou des impulsions de tension formées dans le temps, qui présentent une intensité de courant variable respectivement dans une impulsion de courant ou une tension variable dans une impulsion de tension.

4. Dispositif de mesure (1) selon l'une des revendications 1 à 3, **caractérisé en ce que** l'unité de projection laser (4) est conçue pour alimenter la source de lumière laser (5) avec des impulsions de courant et/ou de tension modulées avec des séquences d'impulsions dans la plage de 10 nanosecondes à 10 microsecondes et un rapport cyclique dans la plage de 5 à 500.

5. Dispositif de mesure (1) selon l'une des revendications 1 à 4, **caractérisé en ce que** l'unité de projection laser (4) est conçue pour projeter une lumière laser bleue dans la plage de longueurs d'onde de 440 à 470 nanomètres.

6. Dispositif de mesure (1) selon l'une des revendications 1 à 5, **caractérisé en ce que** l'unité de projection laser (4) comporte un élément optique diffractif (DOE), une lentille de Powell et/ou un réseau dépendant de la longueur d'onde, à travers lequel passe la lumière laser générée par la source de lumière laser (5).

7. Dispositif de mesure (1) selon l'une des revendications 1 à 6, **caractérisé en ce que** l'unité de projection laser (4) est un générateur de lignes laser, un générateur multilignes ou un générateur de matrice à points aléatoires.

8. Dispositif de mesure selon l'une des revendications précédentes, **caractérisé en ce que** la source de lumière laser (5) est raccordée à une fibre optique (8).

9. Dispositif de mesure selon la revendication 8, **caractérisé en ce que** la fibre optique (8) est enroulée en forme de boucle.

10. Dispositif de mesure selon la revendication 8 ou 9, **caractérisé en ce que** la sortie de la fibre optique (8) est guidée sur une lentille optique (9) pour la collimation de la lumière laser (L) et la lumière laser collimatée (L) sortant de la lentille optique (9) sur une lentille de Powell (10) pour la génération d'une ligne laser (6).

11. Procédé de mesure optique d'objets (2) au moyen de la projection d'une lumière laser avec une unité de projection laser (4), qui comporte une source de lumière laser (5), sur l'objet (2) à mesurer et au moyen d'une capture d'image de l'objet (2) sur lequel est projetée la lumière laser (L) avec une caméra, **caractérisé en ce que** la source de lumière laser (5) est mise en fonctionnement pendant respectivement un temps d'exposition de la caméra (3) avec une puissance de circuit d'attaque qui varie, en particulier un courant d'injection et/ou une tension d'attaque qui varient, afin d'augmenter la largeur de bande des longueurs d'onde laser projetées

12. Procédé selon la revendication 11, **caractérisé par** le fonctionnement de la source de lumière laser (5) avec un courant d'injection modulé par impulsions, une courbe de courant d'injection triangulaire, en dents de scie ou sinusoïdale, ou avec des impulsions de courant d'injection et/ou des impulsions de tension formées dans le temps, qui présentent une intensité de courant variable respectivement dans une impulsion de courant ou une tension variable dans une impulsion de tension.

13. Procédé selon la revendication 12, **caractérisé en ce que** le courant d'injection comprend au moins une onde complète de la courbe du courant d'injection pendant le temps d'exposition.

14. Procédé selon l'une des revendications 11 à 13, **caractérisé en ce que** la source de lumière laser (5) est un laser à semiconducteur.

15. Procédé selon l'une des revendications 11 à 14, **caractérisé par** le fonctionnement de la source de lumière laser (5) avec des impulsions de courant et/ou de tension modulées ayant des durées d'impulsion dans la plage de 10 nanosecondes à 10 microsecondes et un rapport cyclique dans la plage de 5 à 500.

16. Procédé selon l'une des revendications 11 à 15, **caractérisé par** la projection de lumière laser (L) sur l'objet à mesurer (2) avec la source de lumière laser (5) dans la plage de longueurs d'onde de 440 à 470 nanomètres.

17. Procédé selon l'une des revendications 11 à 16, **caractérisé par** l'injection de la lumière laser (L) de la source de lumière laser (5) dans une fibre optique (8) en vue de mélanger la lumière laser (L) injectée par des réflexions multiples dans la fibre optique (8) de telle sorte que la lumière qui sort de la fibre optique (8) à la sortie de lumière de la fibre optique (8) présente un degré de cohérence réduit dans l'espace et dans le temps par rapport à la lumière laser (L) injectée.

18. Procédé selon la revendication 17, **caractérisé par** le guidage de la lumière laser (L) dans la fibre optique (8) en boucles sur une trajectoire courbée au moins dans des sections partielles.

19. Procédé selon la revendication 17 ou 18, **caractérisé par** la collimation de la lumière laser (L) sortant de la fibre optique (8) et la génération d'une ligne laser (6) à partir de la lumière laser (L) ponctuelle collimatée au moyen d'une lentille de Powell (10).
